# EUROPEAN PATENT SPECIFICATION

(11) **EP 2 392 242 B1**
(45) Date of publication and mention of the grant of the patent: **14.08.2013**
(21) Application number: 09839308.5
(22) Date of filing: 17.06.2009
(51) Int. Cl.: A47J 37/06

(54) **TWO-WAY HEATING COOKER**
ZWEIWEGEHEIZHERD
CUISEUR À CHAUFFE BIDIRECTIONNELLE

(30) Priority: 29.01.2009 KR 20090006812; 19.05.2009 KR 20090043422
(43) Date of publication of application: 07.12.2011
(73) Proprietor: Lee, Jin Hee, Gyeonggi-do 410-836 (KR)
(72) Inventor: Lee, Jin Hee, Gyeonggi-do 410-836 (KR)
(74) Representative: Curley, Donnacha John
(86) International application number: PCT/KR2009/003250
(87) International publication number: WO 2010/087548

(56) References cited:
- DE-A1- 2 745 252
- DE-A1-102006 006 454
- DE-U1- 9 209 649
- JP-A- 2007 000 248
- KR-A- 20050 097 862
- KR-A- 20060 132 473
- KR-B1- 100 773 372
- KR-B1- 100 833 966
- KR-B1- 100 833 966

## Description

### Technical Field

The present invention relates to a two-way heating cooker, and more particularly, to a two-way heating cooker having an upper radiation unit that includes a heating unit that is located at a distance from the upper portion of a cooking pan, and grills the upper portions of foods placed on the cooking pan by radiant heat emitted from the heating unit, and a lower heating unit that is located at the bottom of the cooking pan and directly heats the cooking pan, to thereby heat, cook, grill or roast the foods placed on the cooking pan by both the radiant heat emitted from the upper radiation unit and the heat conducted from the lower heating unit.

### Background Art

In general, heat transfer can occur by way of conduction, convection or radiation. Conduction occurs mainly in solids and convection occurs mainly in fluids. In addition, radiation heat is transferred through a process of discharging energy formed of electromagnetic waves emitted from the surface of a particular heating unit, in which heat is emitted at of the speed of light even in a vacuum and is delivered directly to an object. The radiation heat can range from infrared radiation to ultraviolet radiation whose wavelength is shorter than visible light. However, in comparison with visible radiation or ultraviolet radiation, it is known that certain infrared radiation such as far infrared radiation, middle infrared radiation, and near infrared radiation has the strongest heating function.

Therefore, conventional cooking appliances using infrared radiation have been developed in various forms.

One example of an existing infrared cooking appliance was disclosed in Korean Patent Registration No. 0779225 published on November 28, 2007. The infrared meat grill cooker disclosed in the Korean Patent Registration No. 0779225 includes: an infrared lamp whose outer portion is composed of quartz tubes; a cooking pan that is placed over the infrared lamp; and a reflective board that is placed below the infrared lamp. The infrared meat grill cooker employs a uni-directional heating method in which the infrared lamp heats the cooking pan and the cooking pan grills only a lower portion of meat. As a result, in such an infrared meat grill cooker the meat must be turned over constantly in order to prevent the meat from being burnt excessively. In addition, thermal efficiency may be reduced.

Another example of a cooking appliance developed using infrared technology was Korean Utility-model Registration No. 314605 published on May 27, 2003. The meat roaster disclosed in the Korean Utility-model Registration No. 314605 has a near-infrared lamp that is positioned at a certain distance over a gridiron grilling pan and a reflective board over the infrared lamp. The meat roaster applies near-infrared radiation directly onto meat from the above infrared lamp and successfully keeps meats from burning. Accordingly, the meat roaster has an advantage that even the inner portion of the meat can be roasted evenly. However, the meat roaster also employs a uni-directional heating method in which the near-infrared radiation emitted from the near-infrared lamp roasts only a portion of meat, and thus the meat must be turned over constantly in order to prevent the meat from being burnt excessively.

Moreover, in the case of these cooking pans using infrared radiation or near-infrared radiation, there is a problem that it takes a long time to roast foods placed on the cooking pans. In addition, since the infrared lamps or near-infrared lamps should be turned on for a long time in order to heat foods placed on the cooking pans, power consumption is greater.

DE102006006454 describes a device having a double-walled base and central column, accommodating a heating mat for the potatoes inside the base and the cables inside the column. The cables are connected to separate heating elements arranged in a star shape above small cheese containers. Each of the containers can be separately heated when an extension is inserted into the column and the electric supply activated.

KR 100 773372 describes a roasting device with a motor-driven central column.

DE9209649 describes an appliance for keeping food hot on a table by means of an electrical heating system. The electrical heating system is situated in a reflector mounted over a base plate. This reflector is open on the underside and its height can be adjusted relative to the base plate by means of a column.

DE2745252 describes a coal fired cooker comprising a reflector.

Meanwhile, still another example of an existing infrared cooking appliance was disclosed in Korean Patent Registration No. 833966 registered on May 26, 2008 by the same applicant as that of the present application. The infrared radiation cooker disclosed in the Korean Patent Registration No. 833966 includes: a base stand having an upper surface in which a shaft hole is formed in the center of the upper surface, and on one side of which a power switch for controlling an electric power supply is formed; a rotating pan which is a circular plate style container which can contain food on the upper surface thereof, and at the center of the lower surface of which a shaft protrusion is formed so as to be detachably inserted into the shaft hole; a supporting pillar which is vertically oriented at one side of the base stand; and an infrared irradiator which is placed on the upper end of the supporting pillar and which is operated by the power switch, to thus apply infrared radiation onto the rotating pan.

The above-described infrared radiation cooker employs a two-way heating method in which the infrared irradiator irradiates infrared radiation onto food placed on the rotating pan, to thus roast the upper and inner portions of the food and the rotating pan that has been heated by radiant heat of infrared lamps of the infrared irradiator roasts the lower portion of the food. In comparison with the conventional uni-directional infrared cooker, the above-described infrared radiation cooker has advantages that thermal efficiency is excellent, foods such as meat for roasting can be evenly roasted without excessive burning although they are not continuously turned over, and relatively small amounts of smoke or odor are produced during cooking. However, since the supporting pillar is placed at one side of the base stand in the structure of the above-described infrared radiation cooker, it is very inconvenient to take food placed on the rotating pan near where the base stand is disposed. Therefore, it can be inconvenient for several persons who sit around in a restaurant or family situation for example to use the infrared radiation cooker.

In addition, since meat is roasted using radiant heat that is irradiated by the infrared irradiator, the time taken to roast the upper and lower portions of the meat is different, wherein the upper portion of the meat is roasted more quickly than the lower portion of the meat until the rotating pan is heated at an initial time of roasting the meat. Accordingly, although meat can be cooked in two ways in the infrared radiation cooker, consumers who want to eat roasted meat earlier are inclined to turn over the meat so that the lower portion of the meat is roasted earlier. In addition, in spite of an advantage that the lower rotating pan uses radiant heat induced from the upper heat emission of the existing cooker, consumers who are accustomed to use the conventional upstream heating cooker do not sufficiently use a function of two way roasting meat by using the upper heat emission and lower radiant heat use mechanism in the conventional two-way radiation cooker due to a time difference occurring in a cooking time taken to roast the upper and lower portions of food for an initial time of 1-2 minutes as well as general habits when roasting meat.

Further, consumers are used to of waiting until the lower rotating pan is heated by the upper heat irradiator before cooking food as in the case of using existing upstream heating cookers. Accordingly, excessive power consumption occurs due to an unnecessary delay in waiting until the lower rotating pan is heated by the upper heat irradiator before cooking food. In addition, consumers use a method of roasting food while turning over the food that is similar to a unidirectional heating cooker such as the conventional upstream heating cooker at an initial cooking time during cooking due to a time difference between the time taken to roast the upper and lower portions of meat, even in the two-way radiation cooker. In addition it may be inconvenient to wait until the lower rotating pan is heated by the upper heat irradiator before cooking food as in the case of using the existing upstream heating cooker.

### Disclosure of the Invention

To solve the above problems of conventional infrared radiation cookers as well as those of the existing infrared cooking appliance disclosed in Korean Patent Registration No. 833966, it is an object of the present invention to provide a two-way heating cooker that further includes a lower heating unit that is placed at the lower end of a cooking pan that is heated by radiant heat irradiated by an infrared lamp and that directly heats the cooking pan, to thereby heat the cooking pan quickly by the lower heating unit to thus quickly roast food such as meat placed on the cooking pan and reduce power consumption based on a shortened cooking time, and to thereby cook meat evenly without turning over the meat placed on the cooking pan by an upper heating unit with the infrared lamp and the lower heating unit disposed in the cooking pan, to thus make it possible for several persons who gather together and persons who want to eat fast food to eat the food conveniently.

To accomplish the above object of the present invention, there is provided a two-way heating cooker the features of which are set out in the appended claims.

### Brief Description of the Drawings

The above and other objects and advantages of the present invention will become more apparent by describing the preferred embodiments thereof in detail with reference to the accompanying drawings in which:
FIG. 1 is a cross-sectional view of a two-way heating cooker according to an embodiment of the present invention;
FIG. 2 is a perspective view of the two-way heating cooker according to the present invention;
FIG. 3 is a separated perspective view of the two-way heating cooker according to the present invention;
FIG. 4 is a cross-sectional view of a two-way heating cooker according to another embodiment of the present invention;
FIG. 5 is a cross-sectional view of a two-way heating cooker according to still another embodiment of the present invention; and
FIGS. 6A and 6B are cross-sectional views of a two-way heating cooker according to yet another embodiment of the present invention.

### Best Mode for Carrying out the Invention

Hereinbelow, a two-way heating cooker according to preferred embodiments of the present invention will be described in more detail with reference to the accompanying drawings.

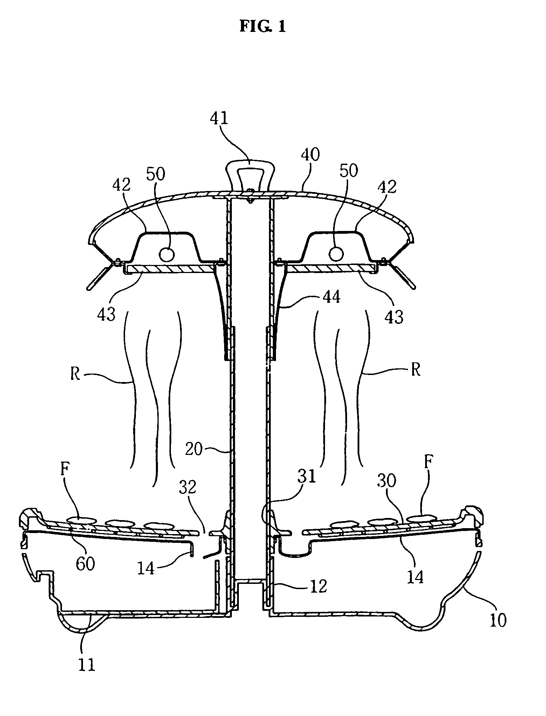

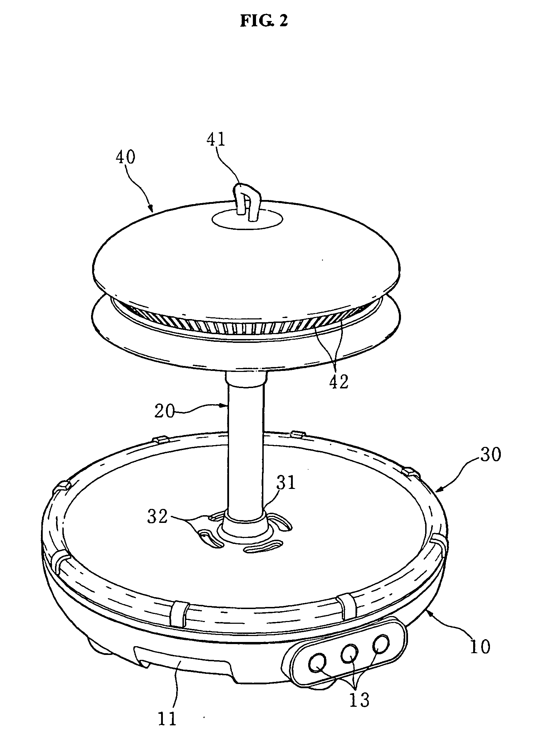

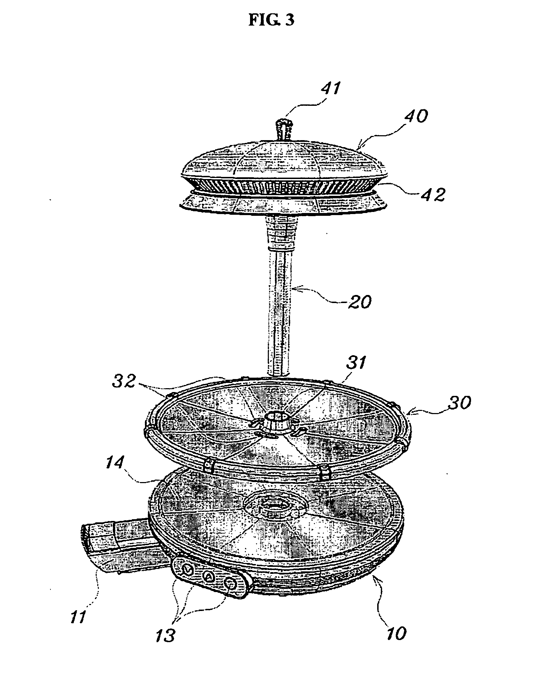

FIG. 1 is a cross-sectional view of a two-way heating cooker according to an embodiment of the present invention. FIG. 2 is a perspective view of the two-way heating cooker according to the present invention. FIG. 3 is a separated perspective view of the two-way heating cooker according to the present invention.

Referring to FIGS. 1 through 3, a two-way heating cooker according to an embodiment of the present invention includes: a base frame 10 that forms a lower framework; a supporting pillar 20 that is vertically oriented at the center of the upper surface of the base frame 10; a cooking pan 30 that is separably placed on an upper portion of the base frame 10, and at the center of which a center hole 31 through which the supporting pillar 20 passes is formed; a cover 40 that is provided at the upper end of the supporting pillar 20; an upper heating unit 50 that is placed on the lower portion of the cover 40 and emits radiant heat toward the cooking pan 30; and a lower heating unit 60 that is provided at the lower end of the cooking pan 30 and transfers heat directly to the cooking pan 30.

Thus, the cooking pan 30 is heated by radiant heat "R" irradiated from the upper heating unit 50 and is directly heated by the lower heating unit 60, and both lower and upper portions of food "F" are simultaneously roasted by radiant heat "R" irradiated from the upper heating unit 50 and by direct heating of the lower heating unit 60.

The base frame 10 is a lower structure that contacts the ground and entirely supports the two-way heating cooker according to the present invention. Preferably, the base frame 10 includes an accommodation space therein. In addition, as necessary, a support protrusion 12 into which the supporting pillar 20 is inserted is formed at the center of the lower surface of the base frame 10, and a switch 13 that controls electric power is formed at one side thereof.

In addition, the supporting pillar 20 is vertically oriented at the center of the upper surface of the base frame 10, and for example is fitted with or screw-engaged with the support protrusion 12. A pressing unit 44 is further provided on the outer surface of the supporting pillar 20,wherein the upper portion of the pressing unit 44 is combined in the inside of the cover 40 so as to firmly support the supporting pillar 20 when adjusting the height of the supporting pillar 20.

Accordingly, the height of the supporting pillar 20 can be adjusted. Although not shown in the drawings, the supporting pillar 20 may be configured to have an outer supporting pillar having a diameter greater than that of an inner supporting pillar in order to adjust the height of the supporting pillar 20. The inner supporting pillar is inserted into the outer supporting pillar so that the height of the supporting pillar 20 can be adjusted. Then, a fixing screw is provided on the outer supporting pillar to thus adjust the height of the supporting pillar. Otherwise, a separate supporting unit is provided in the inside of the outer supporting pillar, to thus freely adjust height of the supporting pillar. That is, in order to improve the effect of the upper heat emission, the supporting pillar can be reduced in height during cooking. During eating, the height of the supporting pillar can be increased so that food can be eaten more comfortably. In addition, the height of the supporting pillar 20 can be adjusted manually, or can be automatically adjusted by an electric motor.

The cooking pan 30 is a circular container having an upper surface on which food "F" can be accommodated. The cooking pan 30 is separably placed on an upper portion of the base frame 10. A center hole 31 through which the supporting pillar 20 passes is formed in the center of the cooking pan 30. Preferably, oil discharge holes 32 are formed in the vicinity of the center hole 32 of the cooking pan 30. Here, oil containing grooves 11 and oil guide plates 14 are formed in the inside of the base frame 10 below the oil discharge holes 32.

The oil guide plates 14 play a role of collecting oil that falls down through the oil discharge holes 32 and guiding the oil into the oil containing grooves 11, respectively. Oil guide grooves (not shown) may be formed in the upper surface of the cooking pan 30 to guide the oil downwards.

In the case of the two-way heating cooker according to an embodiment of the present invention, the cooking pan 30 suitable for roasting food "F" such as pork, beef or fish has been illustrated. However, a cooking pan suitable for boiling food "F" such as stews and casseroles may be provided according to another embodiment of the present invention.

Meanwhile, the cover 40 which may have a mushroom or umbrella form is formed on top of the supporting pillar 20. In one embodiment of the present invention, the cover 40 is integrally formed with the supporting pillar 20, and is separated from the base frame 10. However, in another embodiment of the present invention, the supporting pillar 20 is integrally formed with the base frame 10 and the cover 40 is separated from the supporting pillar 20. In addition, the cooking pan 30 is separated from the two-way heating cooker and is separated simultaneously when the supporting pillar 20 is separated from the two-way heating cooker. If the supporting pillar 20 is integrally formed in the two-way heating cooker, part of the cooking pan 30 is formed to include part of the supporting pillar 20, so that the supporting pillar part of the cooking pan 30 can be separably inserted into the other part of the supporting pillar 20.

In the drawings, reference numeral 41 denotes a grip that allows a user to grasp the cover 40 easily.

In addition, the upper heating unit 50 is provided below the cover 40. In the present invention, any heating unit that emits radiant heat "R" that can heat the cooking pan 30 can be used as the upper heating unit 50. In particular, it is preferable to use a heating unit that emits a large amount of infrared radiation or far-infrared radiation. For example, any one of a far-infrared lamp, an infrared lamp, a halogen lamp, and a coil type filament may be used as the upper heating unit 50. In addition, a ceramic heater, a carbon heater, a quartz tube heater, a titanium heater, or a charcoal fire may be used as the upper heating unit 50.

It is preferable that a thermal insulation reflector 42 is provided between the cover 40 and upper heating unit 50. The thermal insulation reflector 42 plays a role of performing a function of intercepting radiant heat "R" and light that is emitted from the heating unit 50 from being scattered to other places, and furthermore gathering the radiant heat "R" onto the cooking pan 30. In addition, a protective film 43 such as a heat-resistant glass plate, a metallic perforation plate, or a metallic net is provided below the heating unit 50. The protective film 43 protects the upper heating unit 50, prevents the upper heating unit 50 from being polluted by oil, etc., and protects users in case of breakage of the hot heating unit that may happen during use.

In addition, a lower heating unit 60 that directly heats the cooking pan 30 is provided in the lower portion of the cooking pan 30. As illustrated, the lower heating unit 60 may be formed of an electric heat wire that is wound in the lower portion of the cooking pan 30. Besides, the lower heating unit 60 may be formed of an electric heat film or electric heat coating unit. Further, other heating units that are similar to the above-described heating units may be applied as the lower heating unit 60.

In the case of the two-way heating cooker according to the present invention, it is convenient to form the supporting pillar 20, the cover 40 and the upper heating unit 50 as an integral single body, and form the base frame 10 and the cooking pan 30 as separate elements, respectively. By doing so, if the supporting pillar 20 is separated from the base frame 10, the cooking pan 30 can be easily separated from the entire two-way heating cooker so as to be replaced or washed. However, the base frame 20 and the supporting pillar 20 may be formed as an integral single body. In this case, the cooking pan 30 may be formed in a manner that the cooking pan 30 is reduced by the area of the supporting pillar 20. Here, a groove that is formed in the cooking pan 30 is fitted with a separate auxiliary cooking pan while using the two-way heating cooker.

In addition, heat that is applied to the cooking pan 30 from the upper heating unit 50 can be controlled by adjusting the height of the supporting pillar 20, or controlled by using an electric switch 13. In the two-way heating cooker having the above-described structure, the cooking pan 30 and food "F" placed on the cooking pan 30 are heated by radiant heat "R" irradiated from the upper heating unit 50 and are further quickly heated by directly heating the cooking pan 30 by the lower heating unit 60 that is provided in the lower portion of the cooking pan 30.

Accordingly, in comparison with the conventional art in which the cooking pan 30 is simply heated by radiant heat "R" irradiated from an infrared lamp, the two-way heating cooker according to the present invention can heat the cooking pan quickly, to thereby reduce the heating time taken to heat the cooking pan by directly heating the cooking pan with the lower heating unit as well as heating the cooking pan with the radiant heat "R" and to thus reduce power consumption, and roast food "F" such as meat quickly by quickly heating the food "F." That is, both the upper and lower portions of food "F" placed on the cooking pan 30 is two-way heated by radiant heat "R" irradiated from the upper heating unit 50 and conduction heat of the lower heating unit 60, so that users do not have to frequently turn over the food "F" such as meat.

In addition, in the case of the two-way heating cooker according to the present invention, the cooking pan 30 can be rotated manually. Otherwise, the cooking pan can be rotated by an electric motor.

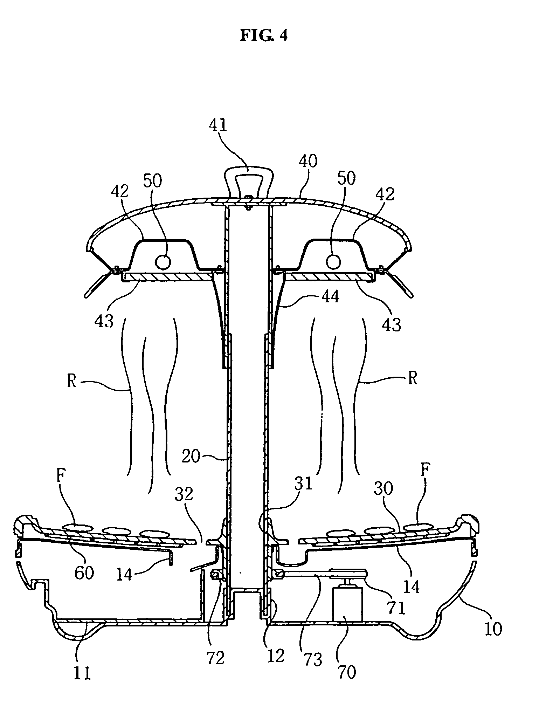

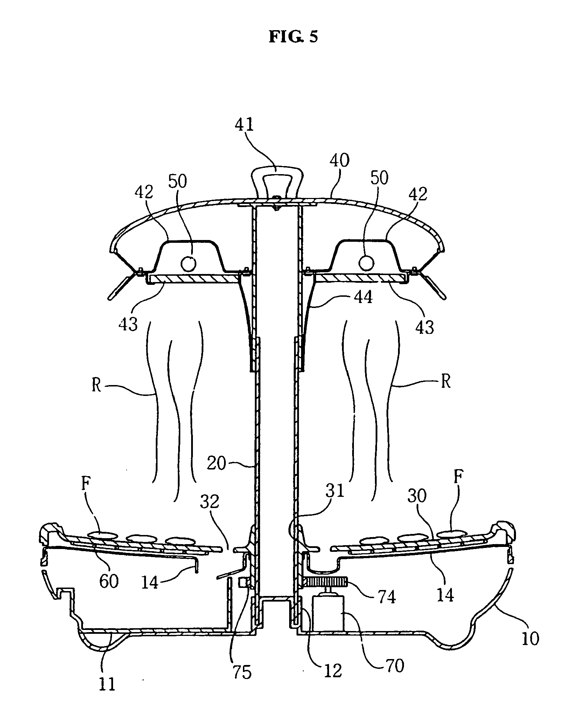

FIG. 4 is a cross-sectional view of a two-way heating cooker according to another embodiment of the present invention. FIG. 5 is a cross-sectional view of a two-way heating cooker according to still another embodiment of the present invention.

As illustrated in FIGS. 4 and 5, an electric motor 70 is additionally provided in the base frame 10, and a rotating unit is automatically rotated by the electric motor 70 to thus make the cooking pan 30 rotate.

As shown in FIG. 4, the rotating unit includes: a driving pulley 71 that is axially fitted with the electric motor 70; a rotating pulley 72 that is fitted with the lower end of the cooking pan 30; and a belt 73 that connects the driving pulley 71 and the rotating pulley 72.

Alternatively, as shown in FIG. 5, the rotating unit includes: a driving gear 74 that is axially fitted with the electric motor 70; and a rotating gear 75 that is tooth-engaged with the driving gear 74 and is fitted with the lower end of the cooking pan 30.

Accordingly, since the cooking pan 30 can be rotated, radiant heat "R" irradiated from the upper heating unit 50 is evenly transferred to food "F" to thus heat and roast the food "F" uniformly.

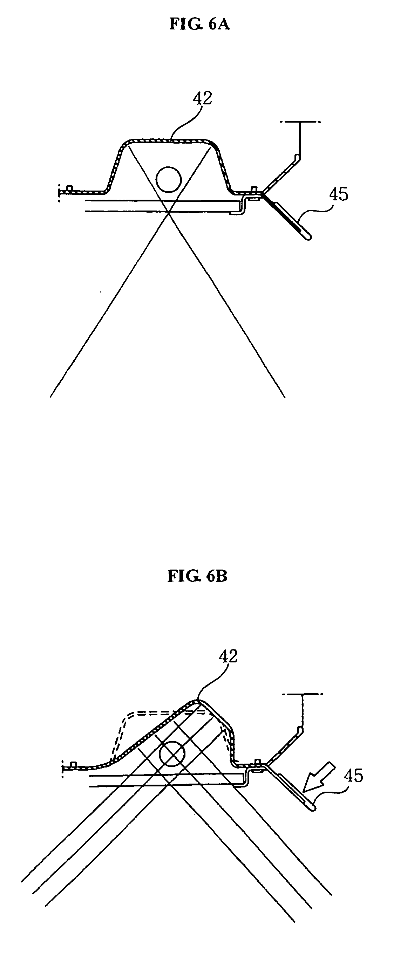

FIGS. 6A and 6B are cross-sectional views of a two-way heating cooker according to the present invention. As shown in FIGS. 6A and 6B, the two-way heating cooker according to the present invention further includes a thermal insulation reflector 42 that is formed between the cover 40 and the upper heating unit 50. In addition, the two-way heating cooker according to the present invention further includes a parabolic angle adjuster 45 that is formed at the outer side of the thermal insulation reflector 42 that is formed between the cover 40 and the upper heating unit 50, and is connected with one side of the thermal insulation reflector 42. Accordingly, one surface of the thermal insulation reflector 42 is steeply sloped by a pressing operation of the parabolic angle adjuster 45 to thereby extensively spread radiant heat emitted from the upper heating unit 50.

Therefore, a user may or may not depress the parabolic angle adjuster 45 according to the height of the upper heating unit 50, to thereby establish a wide range of radiant heat "R" emitted from the upper heating unit 50. As a result, since radiant heat "R" can be suitably transferred to the cooking pan 30 according to the height of the cover 40, food can be cooked smoothly irrespective of the height of the cover 40.

As described above, the present invention has been described with respect to particularly preferred embodiments. However, the present invention is not limited to the above embodiments, and it is possible for one of ordinary skill in the art to make various modifications and variations. Thus, the protective scope of the present invention is not defined within the detailed description thereof but is defined by the claims to be described later.

### Effects of the Invention

A two-way heating cooker according to the present invention employs a two-way heating technology whereby upper and inner portions of food placed on a cooking pan is roasted by radiant heat emitted from an upper heating unit, in particular, infrared radiant heat, and simultaneously the cooking pan is directly heated by a lower heating unit that is provided in the lower end of the cooking pan quickly, to thus directly roast the lower portion of the food by conduction heat from the lower heating unit. Accordingly, since food does not need to be turned over frequently but can be roasted evenly without being burnt excessively, the two-way heating cooker according to the present invention is very suitable for roasting meat such as pork or beef.

In addition, since the supporting pillar is provided at the center of the base frame and the cooking pan in the two-way heating cooker according to the present invention, it is very convenient for several persons who gather in one place to have various kinds of dining tables. In particular, since relatively small amounts of smoke or odours are generated during cooking, the two-way heating cooker according to the present invention is very suitable for use in public places such as restaurants.

In addition, since the cooking pan is quickly heated by the lower heating unit, the time taken to heat the cooking pan can be shortened which greatly reduces power consumption.

## Claims

1. A two-way heating cooker comprising:
a base frame (10) that forms a lower framework;
a supporting pillar (20) that is vertically oriented at the center of the upper surface of the base frame (10);
a cooking pan (30) that is separably placed on an upper portion of the base frame (10), wherein a center hole (31) through which the supporting pillar (20) passes is formed in the center of the cooking pan (30);
a lower heating unit (60) that is provided at the lower end of the cooking pan (30) and transfers heat directly to the cooking pan (30);
a cover (40) that is provided at the upper end of the supporting pillar (20);
an upper heating unit (50) that is placed on the lower portion of the cover (40) and emits radiant heat toward the cooking pan (30); and
a thermal insulation reflector that is formed between the cover (40) and the upper heating unit (50), **characterised in that** it further comprises
a parabolic angle adjuster (45) that is formed at the outer side of the thermal insulation reflector (42) that is formed between the cover (40) and the upper heating unit (50), and is connected with one side of the thermal insulation reflector (42), wherein one surface of the thermal insulation reflector (42) is steeply sloped by a pressing operation of the parabolic angle adjuster (45) to thereby spread radiant heat emitted from the upper heating unit (50),
whereby the cooking pan (30) is heated by radiant heat irradiated from the upper heating unit (50) and is directly heated by the lower heating unit (60), and both lower and upper portions of food are simultaneously roasted by radiant heat irradiated from the upper heating unit (50) and by direct heating of the lower heating unit (60).

2. The two-way heating cooker according to claim 1, further comprising an electric motor (70) that is provided in the inside of the base frame (10) and a rotating unit that is rotated by the electric motor (70) to rotate the cooking pan (30).

3. The two-way heating cooker according to claim 2, wherein the rotating unit comprises:
a driving pulley (71) that is axially fitted with the electric motor (70);
a rotating pulley (72) that is fitted with the lower end of the cooking pan (30); and
a belt (73) that connects the driving pulley (71) and the rotating pulley (72).

4. The two-way heating cooker according to claim 2, wherein the rotating unit comprises:
a driving gear (74) that is axially fitted with the electric motor (70); and
a rotating gear (75) that is tooth-engaged with the driving gear (74) and is fitted with the lower end of the cooking pan (30).

5. The two-way heating cooker according to claim 1, further comprising a pressing unit (44) that is provided on the outer surface of the supporting pillar (20) wherein the upper portion of the pressing unit (44) is combined in the inside of the cover (40) so as to support the supporting pillar (20) when adjusting the height of the supporting pillar (20).

6. The two-way heating cooker according to claim 1, further comprising:
oil discharge holes (32) that are formed in the cooking pan (30); and
oil guide plates (14) and oil containing grooves (11) that are formed below the oil discharge holes (32), wherein the oil guide plates (14) are for collecting oil that falls down through the oil discharge holes (32) and guiding the oil into the oil containing grooves (11) respectively.

7. The two-way heating cooker according to claim 1, wherein the upper heating unit is any one of a far-infrared lamp, an infrared lamp, a halogen lamp, a coil type filament, and a ceramic heater.

## Patentansprüche

1. Zwei-Wege-Heizkocher, aufweisend:
einen Basisrahmen (10), der ein unteres Rahmengestell bildet;
eine Tragsäule (20), die an dem Zentrum der oberen Fläche des Basisrahmens (10) vertikal orientiert ist;
eine Kochpfanne (30), die lösbar an einem oberen Abschnitt des Basisrahmens (10) platziert ist, wobei ein mittiges Loch (31), durch das die Tragsäule (20) verlauft, in dem Zentrum der Kochpfanne (30) gebildet ist;
eine untere Heizeinheit (60), die an dem unteren Ende der Kochpfanne (30) vorgesehen ist und Wärme direkt an die Kochpfanne (30) abgibt;
eine Abdeckung (40), die an dem oberen Ende der Tragsäule (20) vorgesehen ist;
eine obere Heizeinheit (50), die an dem unteren Abschnitt der Abdeckung (40) angeordnet ist und eine Wärmestrahltung in Richtung auf die Kochpfanne (30) emittiert; und
einen thermisch isolierenden Reflektor, der zwischen der Abdeckung (40) und der oberen Heizeinheit (50) gebildet ist, **dadurch gekennzeichnet, dass** er ferner einen parabolischen Winkeleinsteller (45) aufweist, der an der Außenseite des thermischen Isolationsreflektors (42) gebildet ist, der zwischen der Abdeckung (40) und der oberen Heizeinheit (50) gebildet ist, und der mit einer Seite des thermischen Isolationsreflektors (42) verbunden ist, wobei eine Fläche des thermischen Isolationsreflektors (42) mittels einer Druckbetätigung des parabolischen Winkeleinstellers (45) steil geneigt wird, um dadurch die von der oberen Heizeinheit (50) emittierte Strahlungswärme zu spreizen,
wobei die Kochpfanne (30) durch von der oberen Heizeinheit (50) abgegebene Strahlungswärme aufgeheizt und durch die untere Heizeinheit (60) direkt geheizt wird, wobei sowohl der untere als auch der obere Nahrungsmittelanteil gleichzeitig durch die von der oberen Heizeinheit (50) abgegebene Wärmestrahlung und durch ein direktes Erwärmen durch die untere Heizeinheit (60) gebraten wird.

2. Zwei-Wege-Heizkocher nach Anspruch 1, ferner aufweisend einen Elektromotor (70), der innerhalb des Basisrahmens (10) vorgesehen ist, sowie eine Dreheinheit, die durch den Elektromotor (70) gedreht wird, um die Kochpfanne (30) zu rotieren.

3. Zwei-Wege-Heizkocher nach Anspruch 2, wobei die Dreheinheit aufweist:
eine Antriebsriemenscheibe (71), die axial mit dem Elektromotor (70) verbunden ist;
eine Rotationsscheibe (72), die mit dem unteren Ende der Kochpfanne (30) verbunden ist; und
einen Riemen (73), der die Antriebsriemenscheibe (71) mit der Rotationsscheibe (72) verbindet.

4. Zwei-Wege-Heizkocher nach Anspruch 2, wobei die Rotationseinheit aufweist:
ein Antriebszahnrad (74), das axial mit dem Elektromotor (70) verbunden ist; und
ein rotierendes Zahnrad (75), das im Zahneingriff mit dem Antriebszahnrad (74) steht und mit dem unteren Ende der Kochpfanne (30) verbunden ist.

5. Zwei-Wege-Heizkocher nach Anspruch 1, ferner aufweisend eine Andruckeinheit (44), die an der Außenfläche der Tragsäule (20) vorgesehen ist, wobei der obere Abschnitt der Andruckeinheit (44) in dem Innenraum der Abdeckung (40) kombinatorisch wirkt, um so die Tragsäule (20) zu stützen, wenn die Höhe der Tragsäule (20) eingestellt wird.

6. Zwei-Wege-Heizkocher nach Anspruch 1, ferner aufweisend:
Ölabgabelöcher (32), die in der Kochpfanne (30) gebildet sind; und
Ölfuhrungsplatten (14) und Ölaufnahmevertiefungen (11), die unterhalb der Ölabgabelöcher (32) gebildet sind, wobei die Ölfuhrungsplatten (14) zum Sammeln von Öl bestimmt sind, das durch die Ölabgabelöcher (32) gelangt, wobei das Öl jeweils in die Ölaufnahmevertiefungen (11) geführt wird.

7. Zwei-Wege-Heizkocher nach Anspruch 1, wobei die obere Heizeinheit irgendeine Fern-Infrarot-Lampe, eine Infrarotlampe, eine Hallogenlampe, oder vom Typ einer Filamentspule oder eine keramische Heizvorrichtung ist.

## Revendications

1. Appareil de cuisson à double mode de chauffage comprenant :
un châssis de base (10) qui forme une ossature inférieure ;
une colonne de support (20) qui est orientée verticalement au centre de la surface supérieure du châssis de base (10) ;
un plateau de cuisson (30) qui est placé de manière séparable sur une partie supérieure du châssis de base (10), dans lequel un trou central (31) à travers lequel passe la colonne de support (20) est formé au centre du plateau de cuisson (30) ;
une unité de chauffage inférieure (60) qui est disposée à l'extrémité inférieure du plateau de cuisson (30) et transfère de la chaleur directement au plateau de cuisson (30) ;
un couvercle (40) qui est disposé à l'extrémité supérieure de la colonne de support (20) ;
une unité de chauffage supérieure (50) qui est placée sur la partie inférieure du couvercle (40) et émet de la chaleur rayonnante vers le plateau de cuisson (30) ; et
un réflecteur d'isolation thermique qui est formé entre le couvercle (40) et l'unité de chauffage supérieure (50), **caractérisé en ce qu'**il comprend en outre
un élément de réglage d'angle parabolique (45) qui est formé sur le côté extérieur du réflecteur d'isolation thermique (42) qui est formé entre le couvercle (40) et l'unité de chauffage supérieure (50), et est relié à un côté du réflecteur d'isolation thermique (42), dans lequel une surface du réflecteur d'isolation thermique (42) est fortement inclinée par une opération de pression de l'élément de réglage d'angle parabolique (45) pour diffuser ainsi la chaleur rayonnante émise à partir de l'unité de chauffage supérieure (50),
en sorte que le plateau de cuisson (30) est chauffé par la chaleur rayonnante émise à partir de l'unité de chauffage supérieure (50) et est chauffé directement par l'unité de chauffage inférieure (60), et que des portions inférieure et supérieure d'aliment sont toutes deux rôties simultanément par la chaleur rayonnante émise à partir de l'unité de chauffage supérieure (50) et par chauffage direct de l'unité de chauffage inférieure (60).

2. Appareil de cuisson à double mode de chauffage selon la revendication 1, comprenant en outre un moteur électrique (70) qui est disposé dans l'intérieur du châssis de base (10) et une unité rotative qui est mise en rotation par le moteur électrique (70) pour faire tourner le plateau de cuisson (30).

3. Appareil de cuisson à double mode de chauffage selon la revendication 2, dans lequel l'unité rotative comprend :
une poulie motrice (71) qui est assemblée axialement au moteur électrique (70) ;
une poulie rotative (72) qui est assemblée à l'extrémité inférieure du plateau de cuisson (30) ; et
une courroie (73) qui relie la poulie motrice (71) et la poulie rotative (72).

4. Appareil de cuisson à double mode de chauffage selon la revendication 2, dans lequel l'unité rotative comprend :
un engrenage moteur (74) qui est assemblé axialement au moteur électrique (70) ; et
un engrenage rotatif (75) qui s'engrène avec la denture de l'engrenage moteur (74) et est assemblé à l'extrémité inférieure du plateau de cuisson (30).

5. Appareil de cuisson à double mode de chauffage selon la revendication 1, comprenant en outre une unité de pression (44) qui est disposée sur la surface extérieure de la colonne de support (20), dans lequel la partie supérieure de l'unité de pression (44) est combinée dans l'intérieur du couvercle (40) de manière à supporter la colonne de support (20) lors du réglage de la hauteur de la colonne de support (20).

6. Appareil de cuisson à double mode de chauffage selon la revendication 1, comprenant en outre :
des trous d'évacuation d'huile (32) qui sont formés dans le plateau de cuisson (30) ; et
des plaques de guidage d'huile (14) et des gorges contenant de l'huile (11) qui sont formées sous les trous d'évacuation d'huile (32), dans lequel les plaques de guidage d'huile (14) sont destinées respectivement à collecter l'huile qui tombe à travers les trous d'évacuation d'huile (32) et guider l'huile dans les gorges contenant de l'huile (11).

7. Appareil de cuisson à double mode de chauffage selon la revendication 1, dans lequel l'unité de chauffage supérieure est l'un quelconque parmi une lampe à infrarouge lointain, une lampe à infrarouge, une lampe à halogène et un filament de type bobine, et un élément chauffant en céramique.
